# EUROPÄISCHE PATENTSCHRIFT

(11) **EP 3 661 780 B1**
(45) Veröffentlichungstag und Bekanntmachung des Hinweises auf die Patenterteilung: **06.09.2023**
(21) Anmeldenummer: 18749292.1
(22) Anmeldetag: 03.07.2018
(51) Int. Cl.: F16D 25/08, B60K 6/20, B60K 6/387, B60K 6/48, B60K 6/547, F16C 19/30, F16C 33/58, F16D 13/68, F16D 13/70, F16D 23/14, F16D 25/0638, F16D 25/10

(54) **HYBRIDMODUL MIT NADELLAGER UMFASSENDER BETÄTIGUNGSEINHEIT; SOWIE HYBRIDANTRIEBSSTRANG**
HYBRID MODULE HAVING AN ACTUATION UNIT COMPRISING A NEEDLE BEARING, AND HYBRID DRIVE TRAIN
MODULE HYBRIDE DOTÉ D'UNE UNITÉ D'ACTIONNEMENT COMPRENANT UN PALIER À AIGUILLES, ET CHAÎNE CINÉMATIQUE

(30) Priorität: 02.08.2017 DE 102017117511; 14.12.2017 DE 102017129873
(43) Veröffentlichungstag der Anmeldung: 10.06.2020
(73) Patentinhaber: Schaeffler Technologies AG & Co. KG, 91074 Herzogenaurach (DE)
(72) Erfinder: LAIGO, Jonathan, 67100 Strasbourg (FR); LEHMANN, Steffen, 76275 Ettlingen (DE)
(86) Internationale Anmeldenummer: PCT/DE2018/100607
(87) Internationale Veröffentlichungsnummer: WO 2019/024956

(56) Entgegenhaltungen:
- EP-A1- 2 789 870
- DE-A1- 4 311 697
- DE-A1-102012 206 292
- DE-A1-102014 014 669
- DE-A1-102015 224 516
- DE-A1-102015 224 903
- DE-A1-102016 219 234
- DE-A1-102016 221 948
- DE-B3-102014 218 878
- FR-A1- 2 301 731
- US-A1- 2010 282 560
- Skf: "Nadellager", , 30 April 2016 (2016-04-30), XP055883687, Retrieved from the Internet: URL:https://www.skf.com/binaries/pub41/Ima ges/0901d196804b4eec-Needle-roller-bearing s---06003_3-DE(2)_tcm_41-271146.pdf#cid-27 1146 [retrieved on 2022-01-25]

## Beschreibung

Die Erfindung betrifft ein Hybridmodul für einen Antriebsstrang eines Kraftfahrzeuges, wie eines Pkws, Lkws, Busses oder sonstigen Nutzfahrzeuges, mit einem Gehäuse, einer Trennkupplung, einer mit der Trennkupplung zusammenwirkenden und an dem Gehäuse aufgenommenen hydraulischen Betätigungseinheit sowie einer elektrischen Maschine, wobei ein Rotor der elektrischen Maschine rotatorisch mit einem Kupplungsbestandteil der Trennkupplung gekoppelt (vorzugsweise an diesem befestigt) oder koppelbar ist, und wobei die Betätigungseinheit ein relativ zu dem Gehäuse verschiebbar aufgenommenes Kolbenelement aufweist, das mittels eines Betätigungslagers in einer axialen Richtung der Trennkupplung verschiebefest mit, jedoch relativ verdrehbar zu einem zum Ein- und Ausrücken der Trennkupplung dienenden Druckelement verbunden / gekoppelt ist, wobei der Kupplungsbestandteil der Trennkupplung einen Rotorträger aufweist, der mittels eines Stützlagers seitens des Gehäuses drehbar gelagert ist, wobei das Betätigungslager als ein axiales Nadellager ausgebildet ist, und wobei das Axiallager in axialer Richtung zwischen einem in radialer Richtung ausgerichteten Steg des Kolbenelements und dem Druckelement angeordnet ist, und wobei das Hybridmodul dadurch gekennzeichnet ist, dass ein erster Lagerring des Nadellagers unmittelbar durch den Steg ausgebildet ist, und ein zweiter Lagerring des Nadellagers unmittelbar durch das Druckelement ausgebildet ist, und ein mit dem Kupplungsbestandteil der Trennkupplung verschraubtes erstes Schraubelement als Gegenhalter für mehrere Reibelemente der Trennkupplung dient sowie einen ersten Lagerring des Stützlagers axial abstützt oder ein mit dem Gehäuse verschraubtes zweites Schraubelement zur axialen Sicherung eines zweiten Lagerringes des Stützlagers angeordnet ist. Zudem betrifft die Erfindung einen Antriebsstrang für ein Kraftfahrzeug mit diesem Hybridmodul.

Die WO 2010/127 663 A1 offenbart ein Doppelkupplungsgetriebe mit nasser Doppelkupplung, Zweimassenschwungrad und Fliehkraftpendel sowie mit einer mit der Primärseite des Zweimassenschwungrades verbundenen E-Maschine.

Weitere Hybridmodule sind jeweils aus der DE 10 2012 206 292 A1, der DE 10 2016 221 948 A1 und der DE 43 11 697 A1 bekannt.

Aus der EP 2789870 A1 ist ein Hybridmodul gemäß dem Oberbegriff des Anspruchs 1 bekannt.

Bezüglich weiteren Standes der Technik wird auf die DE 10 2014 014 669 A1 verwiesen.

Die aus dem Stand der Technik bekannten Hybridmodule haben jedoch häufig den Nachteil, dass sie - insbesondere in axialer Richtung - relativ großbauend ausgestaltet sind. Dies hat wiederum zur Folge, dass die Hybridmodule nicht einfach in alle bekannten, in unterschiedlicher Weise dimensionierten Antriebsstränge einsetzbar sind. Sollen diese Hybridmodule für verschiedene Anwendungen zum Einsatz kommen, sind bisher relativ aufwändige Anpassungen der Peripheriebauteile des Antriebstranges vorzunehmen, was einen relativ großen Entwicklungs- und Kostenaufwand mit sich bringt.

Es ist daher die Aufgabe der vorliegenden Erfindung, die aus dem Stand der Technik bekannten Nachteile zu beheben und insbesondere ein Hybridmodul zur Verfügung zu stellen, das hinsichtlich seines Bauraums so kompakt ausgebildet ist, dass es für weitere Anwendungen zugänglich wird.

Dies wird erfindungsgemäß durch ein Hybridmodul mit den Merkmalen von Anspruch 1 gelöst. Hierbei ist das Betätigungslager als ein axiales Nadellager ausgebildet.

Durch den Einsatz eines Nadellagers für das Betätigungslager wird insbesondere in axialer Richtung deutlich Bauraum eingespart. Das Hybridmodul ist folglich für weitere Anwendungen zugänglich und in bestehende Antriebsstränge einfach adaptierbar.

Ein mit dem Kupplungsbestandteil der Trennkupplung verschraubtes, erstes Schraubelement als Gegenhalter für mehrere Reibelemente der Trennkupplung dient sowie einen ersten Lagerring des Stützlagers axial abstützt und/oder ein, mit dem Gehäuse verschraubtes, zweites Schraubelement zur axialen Sicherung eines zweiten Lagerringes des Stützlagers angeordnet ist. Dadurch wird das Stützlager besonders robust in axialer Richtung festgehalten. Der erste Lagerring ist dann auf typische Weise drehfest mit dem den Rotor aufnehmenden Kupplungsbestandteil der Trennkupplung verbunden und der zweite Lagerring fest an dem Gehäuse aufgenommen.

Weitere vorteilhafte Ausführungsformen sind mit den Unteransprüchen beansprucht und nachfolgend näher erläutert.

Die hydraulische Betätigungseinheit / Kupplungsbestätigungsvorrichtung weist bevorzugt einen (konzentrischen) Nehmerzylinder (CSC / / "Clutch Slave Cylinder" / "Concentric Slave Cylinder") auf bzw. ist als solcher ausgebildet, wodurch auch das Kolbenelement vorzugsweise ringförmig ausgebildet sowie konzentrisch zu einer Drehachse des Hybridmoduls / der Trennkupplung angeordnet ist. Der Nehmerzylinder dient auf typische Weise zum Einrücken und/oder Ausrücken der Trennkupplung, insbesondere einer Reibungskupplung. Dadurch ist die Betätigungseinheit der Trennkupplung besonders kompakt integriert.

Vorteilhaft ist es auch, wenn das Nadellager einen mehrere Nadelkörper des Nadellagers relativ zueinander (in einer Umfangsrichtung) abstützenden / haltenden Käfig aufweist, wobei der Käfig relativ zu dem Kolbenelement (und somit relativ zu der Drehachse der Trennkupplung) zentriert abgestützt / gehalten ist. Das Kolbenelement ist bevorzugt wiederum seitens des Gehäuses zentriert (zur Drehachse) abgestützt.

Des Weiteren ist es in diesem Zusammenhang vorteilhaft, wenn das Kolbenelement derart ausgebildet ist, dass das Druckelement zumindest teilweise in axialer Richtung mit dem Kolbenelement verschachtelt ist / in das Kolbenelement hineinragt. Als besonders zweckmäßig hat es sich dabei herausgestellt, wenn das Kolbenelement einen, im Längsschnitt des Hybridmoduls betrachtet, C-förmig ausgebildeten (d.h. durch das C umschlossenen, gesamtheitlich ringförmigen) Aufnahmeraum aufweist, wobei das Nadellager und/oder zumindest ein Teil des Druckelementes in axialer Richtung in diesem Aufnahmeraum angeordnet sind/ist. Dadurch lässt sich auf einfache Weise weiterer Bauraum einsparen.

Ist ein das Kolbenelement lagernder / aufnehmender Zylinderbereich der Betätigungseinheit unmittelbar durch das Gehäuse / stoffeinteilig mit dem Gehäuse ausgebildet, wird der Bauraumbedarf weiter optimiert.

Diesbezüglich ist es weiter von Vorteil, wenn die Betätigungseinheit an einer sich in radialer Richtung erstreckenden Zwischenwand des Gehäuses aufgenommen / angeordnet ist.

Zusätzlicher Bauraum kann eingespart werden, wenn ein hydraulischer Druckraum, der von dem Zylinderbereich und dem Kolbenelement umschlossen ist, mittels zumindest einer in dem Gehäuse eingebrachten / angeordneten Bohrung mit einer hydraulischen Strecke verbunden ist.

Ist das Kolbenelement mittels einer an dem Druckelement abgestützten Rückstellfeder (vorzugsweise in Form einer Tellerfeder ausgebildet) in seine eingefahrene Stellung hin vorgespannt, wird die Funktionalität der Betätigungseinheit zusätzlich verbessert.

Der mit dem Rotor rotatorisch gekoppelte (oder koppelbare) Kupplungsbestandteil der Trennkupplung weist einen Rotorträger auf, der mittels eines Stützlagers (vorzugsweise in Form eines Kugellagers) seitens des Gehäuses drehbar gelagert ist. Auf diese Weise ist die Trennkupplung besonders geschickt in dem Hybridmodul integriert.

Neben der Trennkupplung sind vorzugsweise zusätzlich zwei (gemeinsam eine Doppelkupplung ausbildende) Teilkupplungen vorhanden, wobei jede der vorhandenen Kupplungen (d.h. sowohl die Trennkupplung als auch eine erste Teilkupplung und eine zweite Teilkupplung) ölgekühlt ausgebildet ist.

Eine erste Teilkupplung und/oder eine zweite Teilkupplung sind/ist weiter bevorzugt über eine Drehdurchführung betätigt. Dadurch wird weiterer Bauraum eingespart.

Neben dem Stützlager sind weiterhin zwei Stütznadellager vorhanden, die die rotierenden Bestandteile, d.h. insbesondere den den Rotor aufnehmenden Kupplungsbestandteil der Trennkupplung sowie Kupplungsbestandteile der ersten und zweiten Teilkupplung in radialer Richtung abstützen. Das Stützlager ist dabei derart ausgeführt, dass es sowohl als Radial- als auch als Axiallager dient. Die Stütznadellager dienen vorrangig zur radialen Abstützung / Radiallagerung des Rotorträgers / des jeweiligen Kupplungsbestandteils zu einer Getriebewelle eines Getriebes. Dadurch ist eine geschickte Abstützung der einzelnen Elemente realisiert.

Die Trennkupplung und/oder die beiden Teilkupplungen sind bevorzugt nasslaufend / nass (vorzugsweise als nasslaufende / nasse Dreifachkupplung), oder weiter bevorzugt trocken / trockenlaufend (vorzugsweise als trockenlaufende / trockene Dreifachkupplung) ausgebildet. Bei Ausführung der Trennkupplung und der beiden Teilkupplungen als trockenlaufende Kupplungen ist das Nadellager weiter bevorzugt gefettet sowie abgedichtet.

Auch sei darauf hingewiesen, dass das Hybridmodul nicht zwangsweise mit einer koaxialen elektrischen Maschine / E-Maschine ausgestattet sein braucht. Stattdessen ist die elektrische Maschine (vorzugsweise in 48V- oder Hochvolt-Ausführung) in weiteren Ausführungen des erfindungsgemäßen Hybridmoduls auch achsparallel angeordnet. Dann ist der Rotor (mit seine Drehachse) parallel zu der Drehachse der Trennkupplung angeordnet und auf typische Weise mit dem Kupplungsbestandteil der Trennkupplung mittelbar (bspw. über Zugmittel) drehverbunden.

Zudem betrifft die Erfindung einen (Hybrid-)Antriebsstrang für ein Kraftfahrzeug, mit einem erfindungsgemäßen Hybridmodul nach zumindest einer der zuvor beschriebenen Ausführungen.

In anderen Worten ausgedrückt, ist somit erfindungsgemäß ein besonders bauraumsparendes P2-Hybridmodul mit Nadellager-CSC (Betätigungseinheit mit Nadellager) umgesetzt. Das Hybridmodul des Paralleltyps umfasst eine Trennkupplung sowie einen konzentrischen Nehmerzylinder (Betätigungseinheit) zum Betätigen der Trennkupplung. Die Trennkupplung umfasst ein axiales Lager, das mittels eines Nadellagers ausgebildet ist.

Die Erfindung wird nun nachfolgend anhand von Figuren näher erläutert.

Es zeigen:

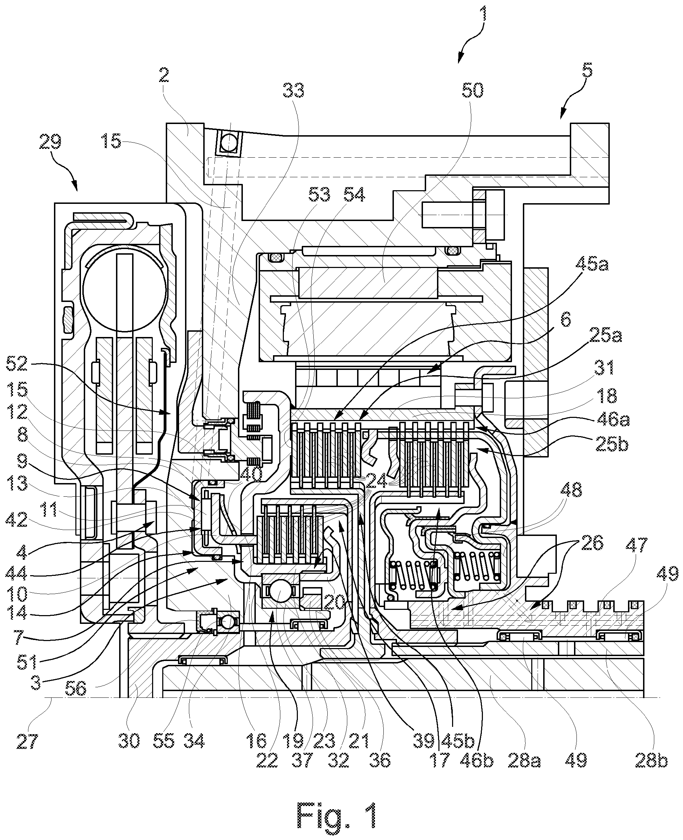

- Fig. 1: eine Längsschnittdarstellung eines erfindungsgemäßen Hybridmoduls nach einem bevorzugten Ausführungsbeispiel, wobei eine als Reibungskupplung (Lamellenreibkupplung) ausgebildete Trennkupplung sowie zwei eine Doppelkupplung ausbildende Teilkupplungen, die ebenfalls als Reibungskupplung (Lamellenreibkupplung) ausgebildet sind und jeweils mit einem Rotor einer elektrischen Maschine gekoppelt sind, in ihrem prinzipiellen Aufbau erkennbar sind, und

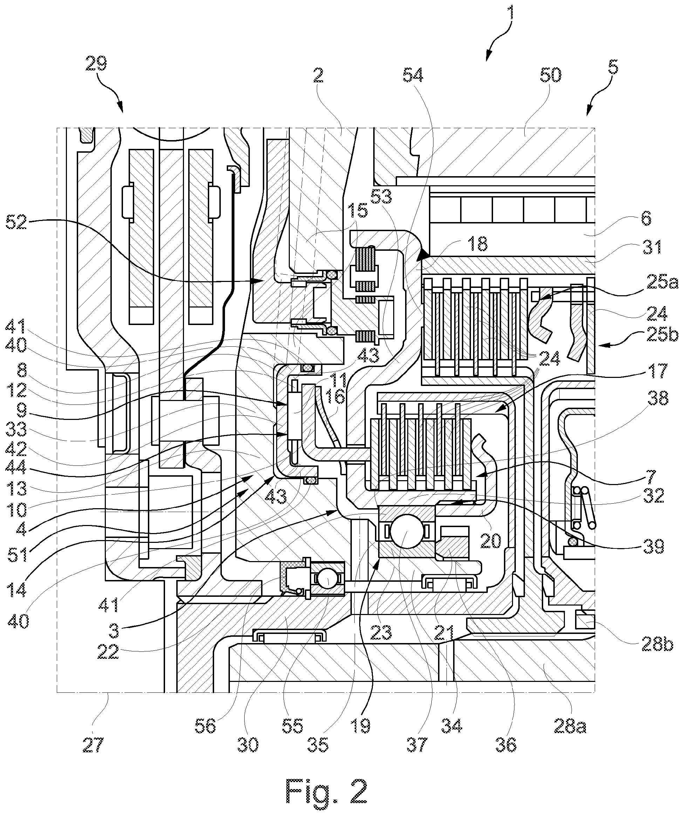

- Fig. 2: eine Detaildarstellung des Hybridmoduls nach Fig. 1 im Bereich einer in einem Gehäuse integrierten, auf die Trennkupplung im Betrieb betätigend einwirkenden Betätigungseinheit.

Die Figuren sind lediglich schematischer Natur und dienen ausschließlich dem Verständnis der Erfindung. Die gleichen Elemente sind mit denselben Bezugszeichen versehen.

In Fig. 1 ist der prinzipielle Aufbau eines nach einem bevorzugten Ausführungsbeispiel ausgeführten, erfindungsgemäßen Hybridmoduls 1 / Hybridantriebsmodul veranschaulicht. Das Hybridmodul 1 ist im Betrieb auf typische Weise Teil eines hier der Übersichtlichkeit halber nicht weiter dargestellten Hybridantriebsstranges eines Kraftfahrzeuges. Teil dieses Antriebsstranges sind unter anderem auch eine hier ebenfalls der Übersichtlichkeit halber nicht weiter dargestellte Verbrennungskraftmaschine sowie ein Getriebe. Das Getriebe ist seitens zweier abschnittsweise gezeigter Getriebewellen 28a, 28b in Form von Getriebeeingangswellen angedeutet. Das Hybridmodul 1 ist wie üblich, entlang eines Drehmomentübertragungsweges gesehen, zwischen einer Ausgangswelle der Verbrennungskraftmaschine und den Getriebewellen 28a, 28b angeordnet. Die Getriebewellen 28a, 28b bilden daher Abtriebswellen des Hybridmoduls 1 aus.

Das Hybridmodul 1 ist als eine Kupplungseinrichtung ausgebildet und weist mehrere Kupplungen (Trennkupplung 3 sowie Teilkupplungen 25a, 25b) auf, die zum Schalten verschiedener Betriebszustände eingesetzt sind. In Abhängigkeit des jeweiligen Betriebszustandes des Hybridmoduls 1 wird ein Drehmoment von der Verbrennungskraftmaschine auf eine der beiden Getriebewellen 28a, 28b und/oder auf die elektrische Maschine 5 übertragen und/oder ein Drehmoment wird von der elektrischen Maschine 5 auf eine der beiden Getriebewellen 28a, 28b und/oder auf die Ausgangswelle der Verbrennungskraftmaschine übertragen.

An dem Hybridmodul 1 ist in Fig. 1 eingangsseitig eine Drehschwingungsdämpfeinheit 29 in Form eines Zweimassenschwungrades angeordnet, wobei diese Drehschwingungsdämpfeinheit 29 als Teil des Hybridmoduls 1 oder losgelöst von dem Hybridmodul 1 angesehen werden kann. Die Drehschwingungsdämpfeinheit 29 ist wiederum mit ihrem Eingang im Betrieb drehfest mit der Ausgangswelle der Verbrennungskraftmaschine und mit ihrem Ausgang drehfest mit einer Welle 30 / Antriebswelle / einem Antriebsflansch des Hybridmoduls 1 verbunden.

Die Welle 30 ist weiterhin drehfest mit einem (zweiten) Kupplungsbestandteil 17 der Trennkupplung 3 verbunden. Der zweite Kupplungsbestandteil 17 der Trennkupplung 3 weist hierzu einen drehfest mit der Welle 30 verbundenen Lamellenträger (Außenlamellenträger) sowie mehrere auf diesem Lamellenträger in einer axialen Richtung (d.h. entlang einer Drehachse 27 des Hybridmoduls 1 / der Trennkupplung 3) relativ zueinander verschiebbare Reibelemente 24 auf. Die Reibelemente 24 des zweiten Kupplungsbestandteils 17 sind in axialer Richtung wechselweise mit Reibelementen 24 eines weiteren (ersten) Kupplungsbestandteils 7 der Trennkupplung 3 angeordnet. Auch der erste Kupplungsbestandteil 7 weist somit mehrere Reibelemente 24 auf, die in der eingekuppelten Stellung der Trennkupplung 3 auf typische Weise reibkraftschlüssig an die Reibelemente 24 des zweiten Kupplungsbestandteils 17 angedrückt sind und in einer ausgekuppelten Stellung der Trennkupplung 3 relativ zu den Reibelementen 24 des zweiten Kupplungsbestandteils 17 frei verdrehbar angeordnet sind. Der erste Kupplungsbestandteil 7 der Trennkupplung 3 weist auch einen die Reibelemente 24 wiederum drehfest sowie axial relativ zueinander verschiebbar aufnehmenden Tragbereich 32 auf. Der Tragbereich 32 der Trennkupplung 3 ist als stoffeinteiliger Bestandteil eines Rotorträgers 18 ausgeführt.

Der Rotorträger 18 weist radial außerhalb des Tragbereiches 32 einen Hülsenbereich 31 auf, an dem ein Rotor 6 einer elektrischen Maschine 5 drehfest aufgenommen ist.

Die elektrische Maschine 5 ist auf typische Weise in einem Gehäuse 2 des Hybridmoduls 1 integriert. Ein Stator 50 der elektrischen Maschine 5 ist fest in dem Gehäuse 2 aufgenommen und der Rotor 6 relativ zu dem Stator 50 verdrehbar gelagert.

Die Lagerung des Rotors 6 relativ zu dem Gehäuse 2 erfolgt über den Rotorträger 18, nämlich über ein an dem Rotorträger 18 angeordnetes, als Kugellager ausgeführtes Stützlager 19. Das Stützlager 19 ist zudem an einer sich in radialer Richtung nach innen erstreckenden Zwischenwand 33 des Gehäuses 2 aufgenommen. Die Zwischenwand 33 weist dazu an ihrer radialen Innenseite einen Napfbereich 34 auf, an dem das Stützlager 19 aufgenommen ist. Insbesondere ist ein (zweiter) zweiteiliger Lagerring 23 des Stützlagers 19 ortsfest an dem Gehäuse 2 / dem Napfbereich 34 befestigt. Der (zweite) Lagerring 23 ist hierzu axial zwischen einer radialen (ersten) Schulter 35 (Fig. 2) des Gehäuses 2 sowie einem (zweiten) Schraubelement 21, das fest auf den Napfbereich 34 aufgeschraubt ist, fest gehalten. Das zweite Schraubelement 21 ist als Schraubring ausgebildet und mit einem Innengewinde 36 auf einem korrespondierenden Gewinde (Außengewinde) des Napfbereiches 34 aufgeschraubt. Ein weiterer relativ zu dem zweiten zweiteiligen Lagerring 23 über Wälzkörper 37 in Form von Kugeln wälzgelagerter (erster) Lagerring 22 des Stützlagers 19 ist an dem ersten Kupplungsbestandteil 7 / dem Rotorträger 18, nämlich an dem Tragbereich 32, befestigt. An dem Rotorträger 18 sind hierzu ein (erstes) Schraubelement 20 und eine an dem Rotorträger 18 unmittelbar mit ausgebildete (zweite) Schulter 38 (Fig. 2), zwischen denen der erste Lagerring 22 in axialer Richtung fest gehalten ist, vorgesehen. Das erste Schraubelement 20 ist im Wesentlichen ringförmig ausgebildet und weist ein Außengewinde 39 auf, mit dem es mit einem korrespondierenden Gewinde (Innengewinde) an dem Rotorträger 18 verschraubt ist. Von diesem Außengewinde 39 aus erstreckt sich das erste Schraubelement 20 zudem in axialer Richtung nach außen, sodass es die Reibelemente 24 der Trennkupplung 3 in axialer Richtung gesehen seitlich überdeckt und als Gegenabstützelement / Gegendruckplatte für diese Reibelemente 24.

Die Welle 30 ist über ein als Kugellager ausgebildetes Lager 55 an dem Gehäuse 2 drehbar gelagert. Ein Radialwellendichtring 56 dient zum Abdichten eines im Betrieb mit Öl befüllten Innenraums des Gehäuses 2, der die Kupplungen 3, 25a und 25b umfasst.

In Fig. 2 ist besonders gut eine Betätigungseinheit 4 für die Trennkupplung 3 veranschaulicht. Die Betätigungseinheit 4 ist als eine hydraulische Betätigungseinheit 4 umgesetzt. Die Betätigungseinheit 4 weist einen konzentrischen Nehmerzylinder 51 auf. Der Nehmerzylinder 51 weist demnach ein ringförmiges Kolbenelement 8 auf, das in axialer Richtung verschiebbar an dem Gehäuse 2 aufgenommen ist. Ein das Kolbenelement 8 verschiebbar in axialer Richtung führender Zylinderbereich 13 ist als stoffeinteiliger Bestandteil des Gehäuses 2, nämlich der Zwischenwand 33, ausgebildet. Das Kolbenelement 8 ist im Längsschnitt nach Fig. 2 betrachtet C-förmig ausgebildet. Radial innen sowie außen angeordnete, sich in axialer Richtung erstreckende Seitenbereiche 40 / Seitenleisten des Kolbenelementes 8, die die seitlichen Arme des Cs bilden, sind zur radialen Innen- bzw. Außenseite hin an dem Gehäuse 2 verschiebbar geführt. Zur Abdichtung eines durch das Kolbenelement 8 sowie den Zylinderbereich 13 umschlossenen Druckraums 14 von der Umgebung sind Dichtungen 41 (Fig. 2) eingesetzt.

Der Druckraum 14 ist mit einer Bohrung 15, die im Gehäuse 2 eingebracht ist, verbunden. Über die Bohrung 15 ist der Druckraum 14 im Betrieb mit einer den Nehmerzylinder 51 mit einem Geberzylinder verbindenden hydraulischen Strecke verbunden.

Wie ebenfalls in Fig. 2 gut zu erkennen, ist das Kolbenelement 8 erfindungsgemäß mittels eines als axiales Nadellager ausgebildeten Betätigungslagers 9 verschiebefest mit einem Druckelement 10, das wiederum verschiebefest mit einem der Reibelemente 24 der Trennkupplung 3 gekoppelt ist, verbunden. Das als Axiallager ausgeführte Nadellager 9 ist in axialer Richtung gesehen zwischen einem in radialer Richtung ausgerichteten Steg 42 des Kolbenelementes 8 und dem Druckelement 10 angeordnet. Der Steg 42 ist jener Bereich des Kolbenelementes 8, der sich in radialer Richtung erstreckt und die beiden Seitenbereiche 40 miteinander verbindet. Das Druckelement 10 weist eine im Längsschnitt betrachtet im Wesentlichen L-förmige Ausgestaltung auf. Das Nadellager 9 wird als Bestandteil der Betätigungseinheit 4 / des Nehmerzylinders 51 angesehen.

Ein erster Lagerring des Nadellagers 9 ist unmittelbar durch den Steg 42 ausgebildet; ein zweiter Lagerring des Nadellagers 9 ist unmittelbar durch das Druckelement 10 ausgebildet. In axialer Richtung zwischen dem Druckelement 10 und dem Steg 42 sind folglich mehrere als Nadelkörper 11 bezeichnete Wälzkörper des Nadellagers 9 angeordnet, wobei selbstverständlich jeder Nadelkörper 11 mit seiner Längsachse in radialer Richtung der Trennkupplung 3 ausgerichtet ist. Einen Abstand zwischen den Nadelkörpern 11 in Umfangsrichtung definiert ein Käfig 12 des Nadellagers 9. Somit ist das Nadellager 9 als ein käfiggeführtes Nadellager ausgebildet.

Der Käfig 12 des Nadellagers 9 ist zudem derart dimensioniert, dass er an seiner radialen Außen- sowie Innenseite relativ zu dem Kolbenelement 8 und somit wiederum relativ zu dem Gehäuse 2 / zur Drehachse 27 zentriert abgestützt ist. Die jeweilige Au-ßen- und Innenseite des Käfigs 12 dient als Zentrierfläche 43 / Führungsfläche / Gleitfläche (Fig. 2), die gleitend mit den Seitenbereichen 40 in Kontakt steht oder bringbar ist.

Das Nadellager 9 ist zudem derart kompakt ausgebildet, dass es vollständig in axialer Richtung in dem durch die beiden Seitenbereiche 40 in radialer Richtung begrenzten (axial zu einer dem Steg 42 abgewandten Seite hin geöffneten) Aufnahmeraum 44 aufgenommen ist. Auch das Druckelement 10 ist teilweise in axialer Richtung in diesem Aufnahmeraum 44 angeordnet.

Des Weiteren ist das Druckelement 10 mittels einer Rückstellfeder 16 in Form einer Tellerfeder axial vorgespannt. Die Rückstellfeder 16 ist so zwischen dem Druckelement 10 und dem Rotorträger 18 eingespannt, dass es das Druckelement 10 zu einer mit der ausgekuppelten Stellung der Trennkupplung 3 korrespondierenden Stellung hin vorspannt. Dies entspricht einer eingefahrenen Stellung der Betätigungseinheit 4 / des Kolbenelementes 8, wie es in der Fig. 2 dargestellt ist.

Zurückkommend auf Fig. 1 ist der weitere Aufbau der beiden Teilkupplungen 25a und 25b erkennbar. Eine erste Teilkupplung 25a sowie eine zweite Teilkupplung 25b sind im Wesentlichen gemäß der Trennkupplung 3 ausgebildet und funktionierend. Die erste Teilkupplung 25a ist ebenfalls mit ihrem ersten Kupplungsbestandteil 45a drehfest an dem Rotorträger 18 angebracht. Der erste Kupplungsbestandteil 45a ist dabei unmittelbar durch den Hülsenbereich 31 mit ausgebildet. Reibelemente 24 des ersten Kupplungsbestandteils 45a sind an einer radialen Innenseite des Hülsenbereiches 31 drehfest sowie axial relativ zueinander verschiebbar aufgenommen. Ein zweiter Kupplungsbestandteil 45b der ersten Teilkupplung 25a ist mit einer ersten Getriebewelle 28a des Getriebes drehfest verbunden. Auch der zweite Kupplungsbestandteil 45b weist auf typische Weise Reibelemente 24 auf, die sich mit den Reibelementen 24 des ersten Kupplungsbestandteils 45a in axialer Richtung abwechseln. Der Rotorträger 18 weist an seinem Flanschbereich 53 (jener Bereich, der den Tragbereich 32 mit dem Hülsenbereich 31 verbindet) eine Abstützkontur 54 in Form einer Erhebung auf, die die Reibelemente 24 in der eingekuppelten Stellung der ersten Teilkupplung 25a axial abstützt.

Die zweite Teilkupplung 25b ist im Wesentlichen gemäß der ersten Teilkupplung 25a aufgebaut und in axialer Richtung neben der ersten Teilkupplung 25a angeordnet. Auch der erste Kupplungsbestandteil 46a der zweiten Teilkupplung 25b ist drehfester Bestandteil des Rotorträgers 18, wohingegen der zweite Kupplungsbestandteil 46b der zweiten Teilkupplung 25b mit einer zweiten Getriebewelle 28b drehfest gekoppelt ist.

Die erste Teilkupplung 25a und die zweite Teilkupplung 25b sind, wie auch die Trennkupplung 3, ölgekühlt.

Die zusammen eine Doppelkupplung ausbildenden ersten und zweiten Teilkupplungen 25a, 25b sind jeweils mittels einer Drehdurchführung 26 betätigt. Hierfür ist ein entsprechendes hydraulisches Leitungssystem in einem fest mit dem Rotorträger 18 verbundenen Leitelement 47 umgesetzt. Die Drehdurchführungen 26 sind jeweils mit einem Betätigungskolben 48 (Fig. 1) wirkverbunden, der die jeweilige Teilkupplung 25a, 25b zwischen ihrer eingekuppelten und ausgekuppelten Stellung betätigt. Zudem dienen die Drehdurchführungen 26 auch zum Beölen der Teilkupplungen 25a, 25b.

Wie weiterhin in Fig. 1 erkennbar ist, ist das Leitelement 47 in radialer Richtung seitens der zweiten Getriebewelle 28b über weitere Stützlager in Form von Stütznadellagern 49 abgestützt. Die beiden Stütznadellager 49 sind in axialer Richtung beabstandet angeordnet und dienen zur radialen Abstützung des Rotorträgers 18 (und dadurch zur radialen Abstützung des jeweiligen Kupplungsbestandteils 7, 45a und 46a der Kupplungen 3, 25a und 25b). Die axialen Kräfte dieser Kupplungen 3, 25a und 25b nimmt hingegen hauptsächlich das Stützlager 19 auf.

Zudem ist ein Rotorlagegebersensor 52 zum Ermitteln der Drehposition des Rotors 6 (über den Rotorträger 18) im Betrieb vorhanden.

In anderen Worten ausgedrückt, ist ein P2-Hybridantriebsmodul (Hybridmodul 1; Fig. 1) mit einer integrierten ölgekühlten Doppelkupplung ((erste) Teilkupplung K1 25a und (zweite) Teilkupplung K2 25b) und einer auch ölgekühlten Trennkupplung K0 3 umgesetzt. Die beide Kupplungen K1 und K2 werden mittels Drehdurchführungen 26 betätigt. Die Betätigung der K0 3 erfolgt mittels eines CSC 51 mit Axial-Nadellager 9, was bei der vorliegenden Anordnung einen Vorteil in Bezug auf den notwendigen Bauraum für die K0-Betätigungseinheit 14 bringt. Somit entsteht einen Vorteil in Bezug auf den gesamten Bauraum des P2-Hybridmoduls 1. Der CSC (Nehmerzylinder 51) mit Nadellager 9 stützt hauptsächlich die axialen Kräfte des CSC-Kolbens (Kolbenelement 8) ab, um die K0 zu betätigen. Der Großteil der axialen Betätigungskräfte aller Kupplungen K0, K1 und K2 stützt das Stützlager 19 ab, wohingegen die radialen Kräfte vom Rotor (Rotor 6 mit Rotorträger 18 inkl. Flanschbereich 53) über die Lagerungen in Form des Stützlagers 19 sowie der Stütznadellager 49 abgestützt werden. Die radialen Restkräfte können optional über die Zentrierung vom Käfig 12 des Axial-Nadellagers 9 am CSC-Kolben 8 abgestützt werden. Die Tellerfeder 16 dient als Rückstellungselement des CSC-Kolbens 8.

Die Bohrung 15 im Gehäuse 2 führt das Öl vom Aktorik-System bis zum gedichteten CSC-Druckraum 14, damit die K0 Trennkupplung 3 betätigt werden kann. Eine StützSchraube (erstes Schraubenelement 20) und eine weitere Schraube (zweites Schraubenelement 21 stützen die Betätigungskräfte der K0 ab und fixieren gleichzeitig das Stützlager 19 axial. Dabei werden die Abstützschrauben 20, 21 in den Rotorflansch 53 (Tragbereich 32) oder an dem Gehäuse-Stumpf (Napfbereich 34) über ein Außen- oder Innengewinde (36, 39) verschraubt. Die radiale und axiale Lagerung des Rotors 6 zusammen mit den drei Kupplungseinheiten 3, 25a, 25b findet somit mittels eines Stützlagers 19 über den Rotorflansch 53 auf der Gehäusezwischenwand 33 und mittels der (radialen) Nadellager (Stütznadellager 49) auf der Abtriebswelle 28b der Teilkupplung K2 über eine Drehdurchführung 26 der K1 und K2 statt.

In Fig. 1 ist der Gesamtschnitt des Hybridantriebsmodules 1 mit der erfindungsgemä-ßen Anordnung des Axial-Nadellagers 9 in dem K0-Nehmerzylinder 51 veranschaulicht. Auch sind die Betätigungseinheit der K1 und K2 als Drehdurchführung 26 und die Beölung der K0 sowie die Lagerung des Rotors 6 zusammen mit der Kupplungseinheit erkennbar. Fig. 2 zeigt eine detaillierte konstruktive Ausführung des Axial-Nadellagers 9 im K0-CSC 51.

### Bezugszeichenliste

- 1: Hybridmodul
- 2: Gehäuse
- 3: Trennkupplung
- 4: Betätigungseinheit
- 5: elektrische Maschine
- 6: Rotor
- 7: erster Kupplungsbestandteil der Trennkupplung
- 8: Kolbenelement
- 9: Betätigungslager
- 10: Druckelement
- 11: Nadelkörper
- 12: Käfig
- 13: Zylinderbereich
- 14: Druckraum
- 15: Bohrung
- 16: Rückstellfeder
- 17: zweiter Kupplungsbestandteil der Trennkupplung
- 18: Rotorträger
- 19: Stützlager
- 20: erstes Schraubelement
- 21: zweites Schraubelement
- 22: erster Lagerring des Stützlagers
- 23: zweiter zweiteiliger Lagerring des Stützlagers
- 24: Reibelement
- 25a: erste Reibkupplung
- 25b: zweite Reibkupplung
- 26: Drehdurchführung
- 27: Drehachse
- 28a: erste Getriebewelle
- 28b: zweite Getriebewelle
- 29: Drehschwingungsdämpfeinheit
- 30: Welle / Flanschwelle
- 31: Hülsenbereich
- 32: Tragbereich
- 33: Zwischenwand
- 34: Napfbereich
- 35: Schulter
- 36: Innengewinde
- 37: Wälzkörper
- 38: Schulter
- 39: Außengewinde
- 40: Seitenkante
- 41: Dichtung
- 42: Steg
- 43: Zentrierfläche
- 44: Aufnahmeraum
- 45a: erster Kupplungsbestandteil der ersten Teilkupplung
- 45b: zweiter Kupplungsbestandteil der ersten Teilkupplung
- 46a: erster Kupplungsbestandteil der zweiten Teilkupplung
- 46b: zweiter Kupplungsbestandteil der zweiten Teilkupplung
- 47: Leitelement
- 48: Betätigungskolben
- 49: Stütznadellager
- 50: Stator
- 51: Nehmerzylinder
- 52: Rotorlagegebersensor
- 53: Flanschbereich
- 54: Abstützkontur
- 55: Lager
- 56: Radialwellendichtring

## Patentansprüche

1. Hybridmodul (1) für einen Antriebsstrang eines Kraftfahrzeuges, wobei das Hybridmodul aufweist:
ein Gehäuse (2),
eine Trennkupplung (3),
eine elektrische Maschine (5), die einen Rotor (6) aufweist, der rotatorisch mit einem Kupplungsbestandteil (7) der Trennkupplung (3) gekoppelt oder koppelbar ist,
eine mit der Trennkupplung (3) zusammenwirkende und an dem Gehäuse (2) aufgenommene hydraulische Betätigungseinheit (4), die ein relativ zu dem Gehäuse (2) verschiebbar aufgenommenes Kolbenelement (8) aufweist, das mittels eines Betätigungslagers (9) in einer axialen Richtung der Trennkupplung (3) verschiebefest mit und relativ verdrehbar zu einem zum Ein- und Ausrücken der Trennkupplung (3) dienenden Druckelement (10) verbunden ist,
wobei der Kupplungsbestandteil (7) einen Rotorträger (18) aufweist, der mittels eines Stützlagers (19) seitens des Gehäuses (2) drehbar gelagert ist, wobei das Betätigungslager (9) als ein axiales Nadellager (9) ausgebildet ist, und wobei
das Axiallager (9) in axialer Richtung zwischen einem in radialer Richtung ausgerichteten Steg (42) des Kolbenelements (8) und dem Druckelement (10) angeordnet ist, **dadurch gekennzeichnet, dass**
ein erster Lagerring des Nadellagers (9) unmittelbar durch den Steg (42) ausgebildet ist,
ein zweiter Lagerring des Nadellagers (9) unmittelbar durch das Druckelement (10) ausgebildet ist, und
ein mit dem Kupplungsbestandteil (7) der Trennkupplung (3) verschraubtes erstes Schraubelement (20) als Gegenhalter für mehrere Reibelemente (24) der Trennkupplung (3) dient sowie einen ersten Lagerring (22) des Stützlagers (19) axial abstützt oder ein mit dem Gehäuse (2) verschraubtes zweites Schraubelement (21) zur axialen Sicherung eines zweiten Lagerringes (23) des Stützlagers (19) angeordnet ist.

2. Hybridmodul (1) nach Anspruch 1, **dadurch gekennzeichnet, dass**
das Nadellager (9) einen mehrere Nadelkörper (11) des Nadellagers (9) relativ zueinander beabstandet haltenden Käfig (12) aufweist, und
der Käfig (12) relativ zu dem Kolbenelement (8) zentriert ist.

3. Hybridmodul (1) nach Anspruch 1 oder 2, **dadurch gekennzeichnet, dass** ein das Kolbenelement (8) aufnehmender Zylinderbereich (13) der Betätigungseinheit (4) unmittelbar durch das Gehäuse (2) ausgebildet ist.

4. Hybridmodul (1) nach Anspruch 3, **dadurch gekennzeichnet, dass** ein hydraulischer Druckraum (14), der von dem Zylinderbereich (13) und dem Kolbenelement (8) umschlossen ist, mittels einer in dem Gehäuse (2) eingebrachten Bohrung (15) mit einer hydraulischen Strecke verbunden ist.

5. Hybridmodul (1) nach einem der Ansprüche 1 bis 4, **dadurch gekennzeichnet, dass** das Kolbenelement (8) mittels einer an dem Druckelement (10) abgestützten Rückstellfeder (16) in seine eingefahrene Stellung hin vorgespannt ist.

6. Hybridmodul (1) nach einem der Ansprüche 1 bis 5, **dadurch gekennzeichnet, dass** neben der Trennkupplung (3) zwei Teilkupplungen (25a, 25b) vorhanden sind, und jede der Kupplungen (3, 25a, 25b) ölgekühlt ausgebildet ist.

7. Hybridmodul (1) nach Anspruch 6, **dadurch gekennzeichnet, dass** eine erste Teilkupplung (25a) oder eine zweite Teilkupplung (25b) über eine Drehdurchführung (26) betätigt sind/ist.

8. Antriebsstrang für ein Kraftfahrzeug der ein Hybridmodul (1) nach einem der Ansprüche 1 bis 7 aufweist.

## Claims

1. A hybrid module (1) for a drive train of a motor vehicle, wherein the hybrid module has:
a housing (2),
a disconnect clutch (3),
an electric machine (5) which has a rotor (6) which is or can be rotatably coupled to a clutch component (7) of the disconnect clutch (3),
a hydraulic actuation unit (4), which cooperates with the disconnect clutch (3) and is accommodated on the housing (2), which has a piston element (8), which is accommodated so as to be displaceable relative to the housing (2), which is connected by means of an actuation bearing (9) in an axial direction of the disconnect clutch (3) so as to be fixed against displacement with and rotatable relative to a pressure element (10) serving to engage and
disengage the disconnect clutch (3),
wherein the clutch component (7) has a rotor carrier (18), which is rotatably mounted by means of a support bearing (19) on the side of the housing (2), wherein the actuation bearing (9) is designed as an axial needle bearing (9), and wherein
the axial bearing (9) is arranged in the axial direction between a web (42) of the piston element (8) aligned in the radial direction and the pressure element (10), **characterised in that**
a first bearing ring of the needle bearing (9) is formed directly by the web (42),
a second bearing ring of the needle bearing (9) is formed directly by the pressure element (10), and
a first screw element (20) screwed to the clutch component (7) of the disconnect clutch (3) serves as a counter-holder for a plurality of friction elements (24) of the disconnect clutch (3) and axially supports a first bearing ring (22) of the support bearing (19), or a second screw element (21) screwed to the housing (2) is arranged for axially securing a second bearing ring (23) of the support bearing (19).

2. The hybrid module (1) according to claim 1, **characterised in that**
the needle bearing (9) has a cage (12) holding a plurality of needle bodies (11) of the needle bearing (9) at a distance from one another, and
the cage (12) is centred relative to the piston element (8).

3. The hybrid module (1) according to claim 1 or 2, **characterised in that** a cylinder region (13) of the actuation unit (4) that accommodates the piston element (8) is formed directly by the housing (2).

4. The hybrid module (1) according to claim 3, **characterised in that** a hydraulic pressure chamber (14), which is enclosed by the cylinder region (13) and the piston element (8), is connected to a hydraulic line by means of a bore (15) made in the housing (2).

5. The hybrid module (1) according to any one of claims 1 to 4, **characterised in that** the piston element (8) is pretensioned into its retracted position by means of a restoring spring (16) supported on the pressure element (10).

6. The hybrid module (1) according to any one of claims 1 to 5, **characterised in that,** in addition to the disconnect clutch (3), there are two partial clutches (25a, 25b) and each of the clutches (3, 25a, 25b) is designed to be oil-cooled.

7. The hybrid module (1) according to claim 6, **characterised in that** a first partial clutch (25a) or a second partial clutch (25b) is actuated via a rotary feedthrough (26).

8. A drive train for a motor vehicle, which has a hybrid module (1) according to any one of claims 1 to 7.

## Revendications

1. Module hybride (1) pour une chaîne cinématique d'un véhicule automobile, le module hybride présentant :
un carter (2),
un embrayage de séparation (3),
une machine électrique (5) qui présente un rotor (6) couplé ou pouvant être couplé en rotation à un élément constitutif d'embrayage (7) de l'embrayage de séparation (3),
une unité d'actionnement hydraulique (4) qui interagit avec l'embrayage de séparation (3) et
qui est logée sur le carter (2), qui présente un élément de piston (8) logé de manière déplaçable par rapport au carter (2), qui est relié au moyen d'un palier d'actionnement (9) dans une direction axiale de l'embrayage de séparation (3) de manière fixe en translation avec et de manière à pouvoir tourner par rapport à un élément de pression (10) servant à l'engagement et au désengagement de l'embrayage de séparation (3),
l'élément constitutif d'embrayage (7) présentant un support de rotor (18) qui est monté de façon rotative au moyen d'un palier d'appui (19) du côté du carter (2), le palier d'actionnement (9) étant formé comme un roulement à aiguilles axial (9), et
le palier axial (9) étant agencé dans la direction axiale entre une entretoise (42) de l'élément de piston (8) orientée dans la direction radiale et l'élément de pression (10), **caractérisé en ce que**
une première bague d'appui du roulement à aiguilles (9) est formée directement par l'entretoise (42),
une seconde bague d'appui du roulement à aiguilles (9) est formée directement à travers l'élément de pression (10), et
un premier élément de vis (20) vissé sur l'élément constitutif d'embrayage (7) de l'embrayage de séparation (3) sert de contre-support à plusieurs éléments de friction (24) de l'embrayage de séparation (3) et supporte axialement une première bague de roulement (22) du palier de support (19) ou un second élément de vis (21) est vissé au carter (2) pour fixer axialement une seconde bague de palier (23) du palier de support (19).

2. Module hybride (1) selon la revendication 1, **caractérisé en ce que**
le roulement à aiguilles (9) présente une cage (12) maintenant plusieurs corps d'aiguilles (11) du roulement à aiguilles (9) à distance les uns des autres, et
la cage (12) est centrée par rapport à l'élément de piston (8).

3. Module hybride (1) selon la revendication 1 ou 2, **caractérisé en ce qu'**une zone cylindrique (13) de l'unité d'actionnement (4) qui reçoit l'élément de piston (8) est formée directement par le carter (2).

4. Module hybride (1) selon la revendication 3, **caractérisé en ce qu'**une chambre de pression hydraulique (14), qui est entourée par la zone de cylindre (13) et l'élément de piston (8), est connectée à une ligne hydraulique au moyen d'un alésage (15) pratiqué dans le carter (2).

5. Module hybride (1) selon l'une quelconque des revendications 1 à 4, **caractérisé en ce que** l'élément de piston (8) est précontraint dans sa position rétractée au moyen d'un ressort de rappel (16) prenant appui sur l'élément de pression (10).

6. Module hybride (1) selon l'une quelconque des revendications 1 à 5, **caractérisé en ce qu'**en plus de l'embrayage de séparation (3), deux embrayages partiels (25a, 25b) sont présents et chacun des embrayages (3, 25a, 25b) est conçu pour être refroidi par huile.

7. Module hybride (1) selon la revendication 6, **caractérisé en ce qu'**un premier embrayage partiel (25a) ou un second embrayage partiel (25b) est actionné par un passage rotatif (26).

8. Chaîne cinématique pour un véhicule automobile comprenant un module hybride (1) selon l'une quelconque des revendications 1 à 7.
